Europäisches Patentamt

European Patent Office

Office européen des brevets

(19)

(11) **EP 1 072 124 B1**

(12) **FASCICULE DE BREVET EUROPEEN**

(45) Date de publication et mention
de la délivrance du brevet:
**22.10.2003 Bulletin 2003/43**

(21) Numéro de dépôt: **00903786.2**

(22) Date de dépôt: **10.02.2000**

(51) Int Cl.⁷: $\text{H04L 9/08}$, H04L 9/30

(86) Numéro de dépôt international:
**PCT/FR00/00332**

(87) Numéro de publication internationale:
**WO 00/048355 (17.08.2000 Gazette 2000/33)**

(54) **PROCEDE DE VERIFICATION DE L'USAGE DE CLES PUBLIQUES ENGENDREES PAR UN SYSTEME EMBARQUE**

VERFAHREN ZUR ÜBERPRÜFUNG DER BENÜTZUNG VON ÖFFENTLICHEN SCHLÜSSELN WELCHE VON EINEM GELADENEN SYSTEM GENERIERT WERDEN

METHOD FOR VERIFYING THE USE OF PUBLIC KEYS GENERATED BY AN ON-BOARD SYSTEM

(84) Etats contractants désignés:
**AT BE CH CY DE DK ES FI FR GB GR IE IT LI LU MC NL PT SE**

(30) Priorité: **11.02.1999 FR 9901652**

(43) Date de publication de la demande:
**31.01.2001 Bulletin 2001/05**

(73) Titulaire: **BULL S.A.**
**78434 Louveciennes Cedex (FR)**

(72) Inventeur: **PINKAS, Denis**
**F-92370 Chaville (FR)**

(74) Mandataire: **Jacobson, Claude**
**Cabinet Lavoix**
**2, Place d'Estienne d'Orves**
**75441 Paris Cedex 09 (FR)**

(56) Documents cités:
**EP-A- 0 456 553     EP-A- 0 539 726**
**EP-A- 0 576 224**

- **HOLLOWAY C: "Controlling the use of cryptographic keys" PROCEEDINGS OF COMPSEC INTERNATIONAL 1995, PROCEEDINGS OF COMPSEC INTERNATIONAL 95. TWELFTH WORLD CONFERENCE ON COMPUTER SECURITY, AUDIT AND CONTROL, LONDON, UK, 25-27 OCT. 1995, pages 587-598, XP000584311 Oxford, UK, Elsevier, UK ISBN: 1-85617-294-5**
- **MATYAS S M: "Key handling with control vectors" IBM SYSTEMS JOURNAL, 1991, USA, vol. 30, no. 2, pages 151-174, XP000234622 ISSN: 0018-8670**

## Description

L'invention concerne un procédé de vérification, notamment de l'usage de clés publiques engendrées par un système embarqué, et le système embarqué correspondant.

Afin d'assurer la sécurité de transmission des données transmises sur les réseaux informatiques, les utilisateurs de ces réseaux ont exercé une forte demande relative à des prestations de chiffrement/déchiffrement et/ou de génération/vérification de signature numérique de ces données transmises.

Les opérations de chiffrement/déchiffrement ont pour but de coder puis de décoder, à partir d'une convention secrète temporairement partagée entre un émetteur et un récepteur, des messages transmis afin de rendre ces derniers inintelligibles aux tiers à cette convention.

Les opérations de signature ont pour objet la transmission de messages spécifiques permettant de s'assurer de l'intégrité et l'origine des données transmises.

Pour des raisons de sécurité publique, les Pouvoirs Publics ont, dans certains états, mis en place des dispositions législatives contraignantes afin d'imposer une réglementation stricte des opérations de chiffrement/déchiffrement utilisant des algorithmes dits "forts". Toutefois, les autres opérations telles le chiffrement/déchiffrement utilisant des algorithmes dits "faibles", l'authentification, l'intégrité et la non-répudiation utilisant un calcul de signature numérique ne font pas l'objet de telles mesures contraignantes. En particulier, le message d'information accompagnant une signature numérique étant transmis en clair peut faire l'objet de tout contrôle de police utile.

Différents systèmes de calcul de signatures numériques ont, jusqu'à ce jour, été proposés.

Ainsi que décrit dans l'article intitulé "Controlling the Use of Cryptographic Keys" publié par Christopher J. Holloway, Computers & Security, 14 (1995) 587-598, les éléments essentiels d'un certificat comprennent, notamment :

- l'identité du titulaire de la clé secrète ;
- l'information de la date de validité de la clé publique ;
- la valeur de la clé publique ;
- la signature de l'émetteur du certificat.

Parmi ces systèmes, les systèmes cryptographiques à clés asymétriques ont été plus particulièrement développés en raison de leur souplesse d'utilisation ou tout au moins de la souplesse relative de gestion des clés précitées. En effet, ces systèmes mettent en oeuvre une clé privée, non publiée, et une clé publique. La connaissance de la clé publique ne permet pas de calculer la clé privée.

Certains algorithmes de signature numérique ne peuvent servir à un autre usage que la signature numérique. C'est ainsi le cas du système connu sous le nom de DSA (Digital Signature Algorithm). Cependant il existe un autre algorithme largement utilisé connu sous le nom de RSA, du nom de leurs inventeurs RIVEST, SHAMIR et ADLEMAN, lequel permet à la fois la mise en oeuvre d'opérations de calcul de signature numérique et de chiffrement/déchiffrement, dit "fort".

La présente invention a, en autres objets, dans le cadre de la mise en oeuvre d'un système cryptographique à des clés asymétriques, de s'assurer qu'un système embarqué utilisant l'algorithme RSA et des clés RSA à usage de signature seulement sera en mesure de supporter uniquement des opérations de signature à partir de cesdites clés et en aucun cas des opérations de déchiffrement.

Un autre objet de la présente invention est la mise en place d'une infrastructure de clés publiques utilisable exclusivement à des fins de signature numérique. En effet, si un utilisateur tentait d'utiliser à des fins de chiffrement l'une des clés publiques RSA ainsi certifiées à des fins de signature, l'entité en possession de la clé privée RSA correspondante se trouverait dans la totale incapacité de pouvoir déchiffrer en utilisant ladite clé privée.

Un autre objet de la présente invention est également un procédé de vérification d'une requête de certification de clé publique engendrée par un système embarqué permettant un contrôle, par une autorité de certification, de l'usage de cette clé à des fins d'opérations de déchiffrement limitées.

Un autre objet de la présente invention est enfin, dans le cadre du contrôle précité de l'usage de cette clé, la limitation de cet usage à des opérations de chiffrement/déchiffrement au moyen d'algorithmes symétriques "faibles" autorisés par certains pouvoirs publics.

On rappelle que les systèmes embarqués sont, de manière générale, constitués par une carte à microprocesseur et mis à la disposition d'une entité.

La notion d'entité précitée recouvre soit la personne physique titulaire d'un système embarqué telle qu'une carte à microprocesseur, soit tout système informatique muni d'un système embarqué ou carte à microprocesseur comparable.

Le procédé de vérification de l'origine de la requête de certification d'une clé publique issue d'un jeu de clés asymétriques, clé publique Kp et clé privée Ks engendrées, pour un algorithme donné CAI et pour un usage donné, tel que le chiffrement/déchiffrement ou la vérification/ génération de signature numérique, par un système embarqué et mémorisées dans la zone mémoire d'un système embarqué Si muni de moyens de calcul cryptographique et de moyens de mémorisation de données numériques à accès externe protégé en écriture/lecture, ces données numériques $IDd_i$ comportant au moins un numéro de série $SN_i$ permettant l'identification du système embarqué et un code d'identification $OP_j$ d'un opérateur habilité à configurer ledit système embarqué et cette requête étant formulée par ledit système embarqué par transmission d'un message de requête MRCA contenant ladite clé publique Kp à une autorité de certification CA est remarquable en ce qu'il consiste, préalablement à toute transmission d'une requête de certification, lors de la configuration de ces systèmes embarqués par cet opérateur habilité, pour tous les systèmes embarqués Si d'un ensemble Lk de systèmes embarqués :

- à faire engendrer par cet opérateur habilité, pour cet ensemble donné de systèmes embarqués, une clé publique mère KpM et une clé privée mère KsM ;

- à publier ladite clé publique mère KpM associée d'une part à l'identité de cet opérateur habilité OP$_j$ et d'autre part à cet ensemble Lk de systèmes embarqués ; et pour chaque système embarqué appartenant à la plage d'identifiants définie par l'ensemble Lk de systèmes embarqués :

- à faire engendrer par cet opérateur habilité, à partir de ladite clé privée mère KsM et du numéro de série SN$_i$ du système embarqué, une clé privée diversifiée KsM$_i$ et à mémoriser, dans ladite zone mémoire à accès externe protégé en écriture/lecture, ladite clé privée diversifiée KsM$_i$, et préalablement à toute transmission d'une requête de certification,

- à faire engendrer par l'intermédiaire du système embarqué une requête de certification RCA, contenant en particulier un champ de clé publique CAl, Kp et les indicateurs d'usage U de cette clé publique;

- à faire engendrer par l'intermédiaire du système embarqué, au moyen desdits moyens de calcul et de ladite clé diversifiée KsM$_i$, associée à ce système embarqué, une valeur de contrôle cryptographique Sc$_i$ sur l'ensemble de la requête RCA, cette valeur de contrôle cryptographique étant une signature numérique calculée au moyen de la clé privée diversifiée KsM$_i$ ; et lors de l'émission, par le système embarqué, d'une requête de certification à l'autorité de certification :

- à former un message de requête de certification MRCA contenant la requête RCA, l'identifiant IDd$_i$ du système embarqué, ce dernier étant constitué d'une part de l'identifiant OP$_j$ de cet opérateur habilité et d'autre part du numéro de série SN$_i$ du système embarqué, et la valeur de contrôle cryptographique Sci,

- à transmettre à l'autorité de certifications CA ledit message de requête MRCA formé lors de l'étape précédente et contenant les champs de clé publique CAl,Kp et les indicateurs d'usage U, objets de ladite certification, et ladite valeur de contrôle cryptographique Sc$_i$ ;

- à retrouver, lors de la réception d'un message de requête de certification MRCA par l'autorité de certification, l'identité de l'opérateur habilité OP$_J$ à partir de l'identifiant IDd$_i$ du système embarqué,

- à retrouver, à partir de l'identifiant OP$_j$ de l'opérateur habilité, la valeur de la clé publique mère KpM associée à l'ensemble Lk auquel appartient le système embarqué ;

- à vérifier, à partir de ladite clé publique mère KpM, dudit numéro de série SN$_i$ du système embarqué, dudit message de requête de certification reçue MRCA, ladite valeur de contrôle cryptographique Sc$_i$, ce qui permet d'établir l'authenticité de cette valeur de contrôle cryptographique et de l'origine de cette requête de certification.

Le procédé de vérification d'une requête de certification de clé engendrée par un système embarqué, objet de l'invention, s'applique à tout type de système embarqué, mais plus particulièrement à des systèmes embarqués en nombre constitués chacun par une carte à microprocesseur ou analogue.

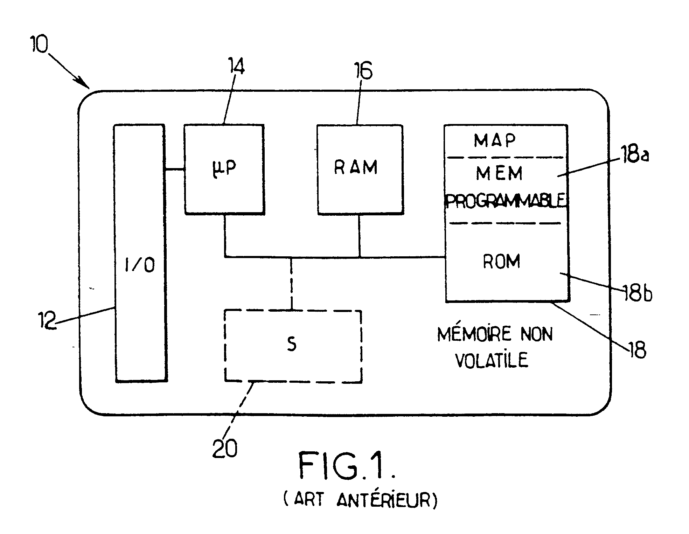

Il sera mieux compris à la lecture de la description et à l'observation des dessins ci-après dans lesquels, outre la figure 1 relative à un système embarqué, constitué par une carte à microprocesseur de type classique,

- la figure 2a représente, à titre d'exemple non limitatif, un organigramme de l'ensemble des opérations ou étapes permettant la mise en oeuvre du procédé objet de la présente invention, c'est à dire de la génération d'une requête de certification générée par le système embarqué;

- la figure 2b représente, à titre d'exemple non limitatif, un organigramme d'une variante de mise en oeuvre du procédé, objet de la présente invention, tel que représenté en figure 2a et dans lequel un contrôle de la syntaxe d'un gabarit de requête de certification fournie au système embarqué est effectué par le système embarqué, préalablement à la génération de ladite requête de certification ;

- la figure 3 représente, sous forme d'un diagramme fonctionnel, le détail de l'étape du procédé mis en oeuvre ainsi qu'illustré en figure 2a ou 2b, dans laquelle une clé privée diversifiée est calculée pour chaque système embarqué ;

- la figure 4a représente, à titre d'exemple non limitatif, la structure d'un message de requête de certification dans une version simplifiée, permettant la mise en oeuvre du procédé objet de l'invention tel que représenté en figure 2a ;

- la figure 4b représente, à titre d'exemple non limitatif, la structure d'un message de requête de certification dans une version améliorée et codé au format ASN1 selon une structure TLV, plus particulièrement destinée à la mise en oeuvre du procédé objet de l'invention tel que représenté en figure 2b ;

- la figure 5 représente, sous forme d'un diagramme fonctionnel, le détail de l'étape du procédé mis en oeuvre ainsi qu'illustré en figure 2a ou 2b, dans laquelle une vérification du message de requête est effectuée par l'autorité de certification ;

- la figure 6 représente une variante particulièrement avantageuse de mise en oeuvre du procédé objet de la présente invention, dans laquelle à la clé privée associée à une clé publique, objet d'une requête de certification, est associée une clé symétrique de chiffrement/déchiffrement faible, au système embarqué correspondant étant ainsi conféré une fonction de chiffrement/déchiffrement faible, satisfaisant aux dispositions légales en vigueur dans certains pays en vue d'une commercialisation de ces systèmes en l'absence d'une autorisation préalable ;

- la figure 7 représente un système embarqué permettant la mise en oeuvre du procédé objet de l'invention.

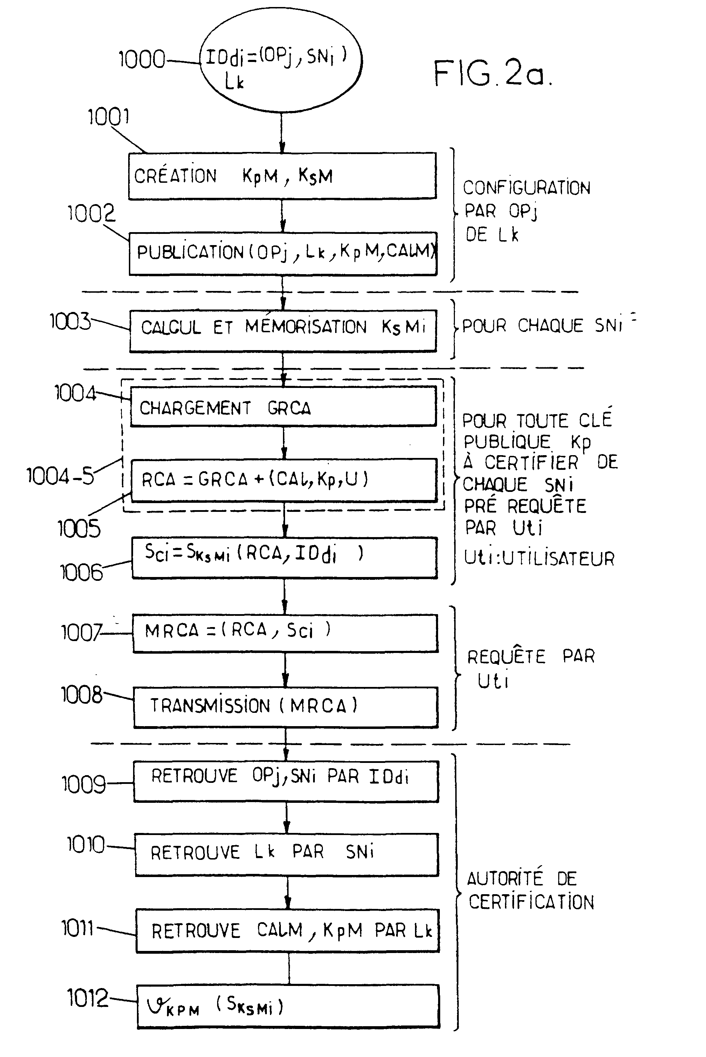

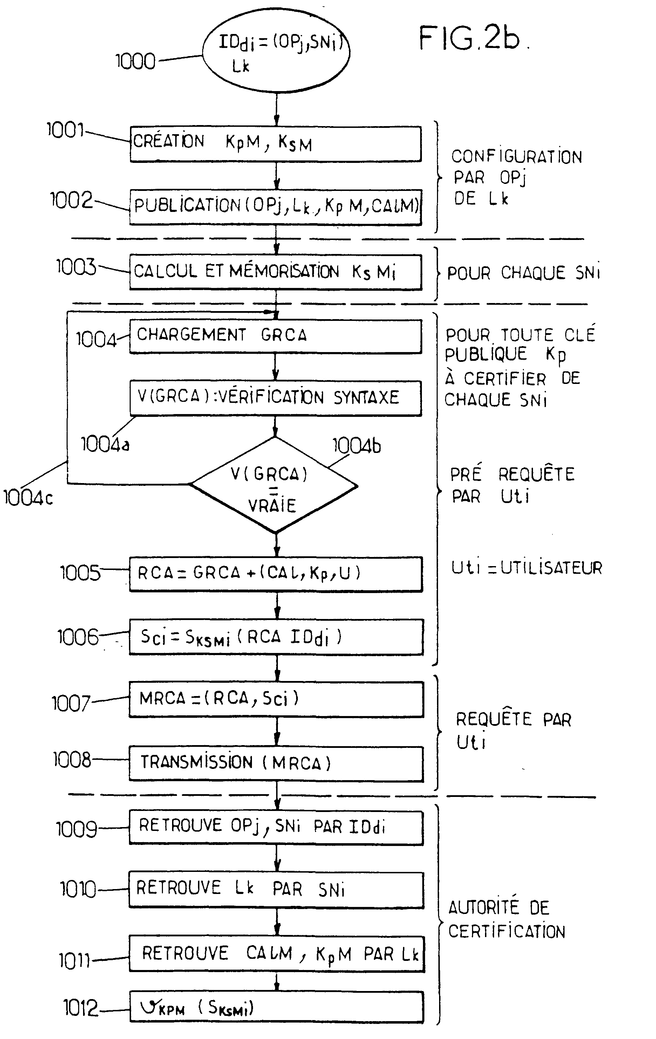

Une description plus détaillée du procédé de vérification de la requête de certification d'une clé publique conforme à l'objet de la présente invention sera maintenant donnée en liaison avec les figures 2a, 2b et les figures suivantes.

Préalablement à la description détaillée des étapes nécessaires à la mise en oeuvre du procédé en liaison avec les figures précitées, des considérations d'ordre général visant à illustrer le contexte de mise en oeuvre du procédé, objet de la présente invention, seront données ci-après.

D'une manière générale, le procédé objet de la présente invention permet d'assurer la vérification d'une requête de certification de clé publique engendrée par un système embarqué, cette vérification comportant notamment la vérification de l'origine de cette requête, mais également compte tenu de la vérification ainsi effectuée et de la certitude ainsi obtenue de l'origine de cette requête, d'avoir la certitude que la clé privée correspondant à la clé publique générée faisant l'objet de la présente requête de certification ne pourra servir qu'à des usages bien spécifiés, telle la génération de signature numérique ou le déchiffrement de clés symétriques faibles.

Les clés publiques étant, comme leur nom l'indique, publiques, il ne saurait être question de pouvoir limiter l'usage de ces clés pour le chiffrement. Cependant les clés privées étant nécessairement protégées, le mécanisme de protection mis en oeuvre pourra être en mesure d'empêcher l'usage de clés privées RSA à des fins de déchiffrement. Si donc l'opération de chiffrement ne peut être interdite, l'opération de déchiffrement peut l'être et donc le processus de chiffrement/déchiffrement devient ainsi impossible. La procédure mise en oeuvre s'appuie sur le fait qu'il est possible de s'assurer que la clé privée correspondant à une clé publique donnée ne pourra être utilisée à des fins de déchiffrement de par le fait qu'il est possible d'être sûr qu'elle est effectivement contenue dans un système embarqué protégé empêchant son usage à des fins de déchiffrement.

Afin de s'assurer qu'une clé donnée est attachée à une entité donnée, une technique de certification des clés est actuellement largement utilisée. Cette technique consiste à faire engendrer par une Autorité de Certification AC un certificat de clé publique qui associe à un nom d'entité donné, un identifiant d'algorithme à clé publique CAI, une valeur de clé publique Kp, pour des usages donnés U et ce, pour une période de validité donnée. Un exemple de tel certificat est connu sous le nom de certificat X.509 du nom de la norme de l'ITU (International Telecommunications Union) qui l'a normalisé.

Afin de pouvoir participer à une architecture supportant des clés publiques il est nécessaire de pouvoir disposer d'un certificat de clé publique. Pour cela il est nécessaire de formuler une requête qui comporte les informations que le demandeur souhaite voir figurer dans son certificat. Cette requête comporte en particulier l'identifiant de l'algorithme utilisé CAI, la valeur de la clé publique Kp pour cet algorithme et les usages de cette clé U. Si la requête émane directement de l'entité il est impossible de connaître les protections mises en oeuvre pour la clé privée correspondante. Cependant si la requête émane directement d'un système embarqué protégé empêchant l'usage de la clé privée à des fins de déchiffrement, alors il est possible de s'assurer que la clé privée correspondant à la clé publique qui fait l'objet de la demande de certification ne pourra être utilisable que pour les usages indiqués, par exemple à des fins de génération de signature ou de déchiffrement de clés faibles. C'est l'un des objets du procédé objet de la présente invention, lequel sera décrit ci-après en détail en liaison avec les figures 2a et 2b.

Le procédé, objet de la présente invention, sera décrit maintenant dans le cas non limitatif où le système embarqué est constitué par une carte à microprocesseur telle qu'une carte bancaire, une carte PCMCIA analogue.

De manière classique, ainsi que représenté sur la figure 1, une carte à microprocesseur 10 comprend un système d'entrée/sortie 12, reliée au microprocesseur 14, une mémoire RAM 16, une mémoire non volatile 18, constituée par une mémoire morte ROM 18b et une mémoire programmable 18a. L'ensemble de ces éléments est relié au microprocesseur 14 par une liaison par BUS. Un module 20 de calcul cryptographique de données est, en outre, ajouté. La mémoire non volatile 18 comporte habituellement une zone mémoire à accès protégé en écriture/lecture, notée MAP, l'accès de cette zone étant réservé au seul microprocesseur 14 à des fins d'utilisation purement interne.

En référence à la figure 1, on indique que dans une telle carte à microprocesseur, le module de calcul cryptographique peut contenir des programmes de génération ou vérification de signature, de chiffrement/déchiffrement mis en oeuvre à partir de processus dits "forts" supportés par l'algorithme RSA par exemple, ainsi que des processus dits "faibles" supportés par des algorithmes tel que le DES limité à des tailles de clé de 40 bits par exemple.

Conformément à la figure 2a, un opérateur habilité, identifié par un identifiant $OP_j$ est en situation à l'étape 1000 de procéder à une configuration d'un ensemble de systèmes embarqués, cet ensemble étant noté Lk. D'une manière pratique, on indique que cet ensemble correspond à un lot de systèmes embarqués tel que des cartes à microprocesseur par exemple, que cet opérateur souhaite distribuer dans le commerce. Cet opérateur habilité peut bien entendu être soit le fabricant de cartes à mémoire soit tout sous-traitant habilité par ce dernier ou par une autorité publique ou privée agréée. Chaque système embarqué est en outre doté d'un numéro d'identification noté $SN_i$ et, dans le cadre de la mise en oeuvre du procédé, objet de la présente invention, chaque système embarqué $S_i$ appartenant à l'ensemble Lk donné est donc muni d'un numéro d'identification, noté $IDd_i$ constitué par l'identifiant de l'opérateur habilité $OP_j$ et par le numéro de série $SN_i$ de ce système embarqué.

Afin de vérifier notamment l'origine de la requête de certification d'une clé publique issue d'un jeu de clés asymétriques, clé publique Kp et clé privée Ks, engendrées par un système embarqué appartenant à l'ensemble de systèmes embarqués précité, ces clés publique Kp et privée Ks étant engendrées pour un usage donné tel que le chiffrement/déchiffrement ou la vérification/génération de signature numérique par exemple, le procédé objet de la présente invention consiste, préalablement à toute transmission d'une requête de certification, lors d'une étape de configuration des systèmes embarqués par l'opérateur habilité à réaliser cette configuration, à faire engendrer, en une étape 1001, par cet opérateur habilité et pour l'ensemble de systèmes embarqués, une clé publique mère, notée KpM, et une clé privée mère KsM destinées à être mises en oeuvre dans le cadre d'un processus supporté par l'algorithme CalM relatif aux clés KpM et KsM.

L'étape 1001 précitée, suivie d'une étape 1002 consistant à publier la clé publique mère KpM associée d'une part à l'identité de l'opérateur habilité $OP_j$ et d'autre part à l'ensemble Lk de systèmes embarqués. Ainsi que représenté à l'étape 1002 sur la figure 2a, cette publication peut consister en une publication de quatre valeurs liées sous forme d'une liste par exemple, c'est-à-dire de l'identifiant de l'opérateur habilité $OP_j$, d'une plage d'identifiants définie par l'ensemble Lk et bien entendu de la valeur de la clé publique mère KpM associée au code indicateur de l'algorithme à mettre en oeuvre CAIM. La plage d'identifiants peut être constituée par un identifiant de début et de fin de plage.

Lors de cette étape de configuration par l'opérateur habilité, on indique que la création des clés, clé publique mère KpM et clé privée mère KsM, est directement dépendante de l'algorithme utilisé et ne peut donc être décrite de manière indépendante du processus supporté par l'algorithme mis en oeuvre. Le type d'algorithme à mettre en oeuvre est cependant précisé ci-après.

A la suite de l'étape 1002 précitée, le procédé, objet de la présente invention consiste, pour chaque système embarqué Si appartenant à l'ensemble Lk des systèmes embarqués, à calculer en une étape 1003, à partir de la clé privée mère KsM et du numéro de série $SN_i$ de chaque système embarqué considéré $S_i$, une clé privée diversifiée, notée $KsM_i$.

Conformément à un aspect particulièrement avantageux du procédé, objet de la présente invention, la clé privée diversifiée $KsM_i$ est alors mémorisée dans la zone mémoire à accès externe protégé en lecture/écriture MAP de la carte à microprocesseur constituant le système embarqué.

D'une manière générale, on indique que la clé privée diversifiée $KsM_i$ est unique et distincte pour chaque système embarqué dont l'identifiant $SN_i$ est différent dans l'ensemble Lk.

Suite à l'étape 1003 précédemment mentionnée, le procédé, objet de la présente invention, consiste, dans une version avantageuse, préalablement à toute transmission d'une requête de certification et pour toute clé publique Kp à certifier à la demande de chaque système embarqué Si considéré, cette demande étant bien entendu formulée par un utilisateur Uti, c'est-à-dire par une entité, à faire engendrer, en une étape 1004-5, par l'intermédiaire du système embarqué, une requête de certification RCA contenant en particulier un champ de clé publique CAI,Kp et les indicateurs d'usage U de cette clé publique. Lorsque la requête de certification RCA est engendrée directement par le système embarqué, le procédé peut consister à engendrer, au niveau du système embarqué, la requête de certification RCA. Celle-ci est alors composée de trois champs, soit un identifiant d'algorithme à clé publique CAI, une valeur de clé publique Kp et un indicateur des usages de cette clé U.

Dans un mode de réalisation spécifique non limitatif, l'étape 1004-5 peut par exemple consister à communiquer, en une étape 1004, au système embarqué d'identifiant $SN_i$ considéré, un gabarit de requête de certification, noté GRCA, ce gabarit contenant tous les champs requis hormis les champs de clé publique de déchiffrement ou de vérification de signature numérique ainsi que les indicateurs d'usage U de la clé publique Kp, objets de la certification demandée.

La vérification du gabarit de requête de certification GRCA sera décrite de manière plus détaillée ultérieurement dans la description.

Le gabarit de requête de certification GRCA permet alors, en une étape 1005, au système embarqué considéré, d'effectuer une opération consistant à compléter les champs manquants du gabarit de requête de certification GRCA. Ainsi, le champ de clé publique, champ comportant l'identifiant d'un algorithme CAI de chiffrement/déchiffrement ou de calcul de signature, par exemple l'algorithme RSA précité, et une valeur de clé publique Kp, objet de la certification demandée, ainsi que le champ relatif aux indicateurs d'usage U de cette clé publique sont complétés afin de reconstituer une requête de certification complète, notée RCA, à l'étape 1005 suivante.

Sur la figure 2a, on a représenté l'étape 1005 comme consistant à faire effectuer le complément par le système embarqué des champs manquants précités, le symbole + représentant cette opération de complément. D'une manière générale, on indique que l'opération de complément précitée peut consister soit à attribuer des valeurs adéquates à des valeurs fictives déjà présentes dans le gabarit de requête de certification GRCA dans des champs déterminés, soit le cas échéant à compléter ce gabarit de requête par des opérations de concaténation au moyen de ces valeurs adéquates ainsi qu'il sera décrit ultérieurement dans la description.

L'étape 1004-5 ou l'étape 1005 précitée est alors suivie d'une étape 1006 consistant à calculer, grâce à la mise en oeuvre du module de calcul du système embarqué considéré et de la clé diversifiée $KsM_i$ associée à ce système embarqué à l'étape 1003, une valeur de contrôle cryptographique, notée $Sc_i$.

D'une manière générale, on indique que la valeur de contrôle cryptographique précitée est calculée sur l'ensemble de la requête complétée RCA ainsi que sur l'identifiant $IDd_i$ du système embarqué considéré. On rappelle que l'identifiant $IDd_i$ du système embarqué $Si$ est constitué par l'identifiant $Op_j$ de l'opérateur habilité et par le numéro de série $SN_i$ du système embarqué.

De préférence, la valeur de contrôle cryptographique $Sc_i$ est une signature numérique calculée au moyen de la clé privée diversifiée $KsM_i$.

Pour cette raison la valeur de contrôle cryptographique vérifie la relation :

$$Sc_i = S_{KsMi}(RCA, IDd_i)$$

Dans cette relation, on indique que l'indice KsMi affecté à l'opération de signature S indique le calcul de cette signature à partir de la clé privée diversifiée $KsM_i$ sur les arguments RCA et $IDd_i$.

Le procédé, objet de la présente invention, consiste alors, lors de l'émission par le système embarqué considéré d'une requête de certification à l'autorité de certification, cette opération étant notée "Requête par $Ut_i$" sur la figure 2a, à former, à l'extérieur du système embarqué, en une étape 1007, un message de requête de certification, noté MRCA, composé de la requête complétée RCA par le système embarqué considéré, de l'identifiant du système embarqué, ainsi que de la valeur de contrôle cryptographique $Sc_i$ considérée.

Suite à l'étape 1007 précitée, une étape 1008 est prévue, laquelle consiste à transmettre à l'autorité de certification CA le message de requête MRCA formé lors de l'étape 1007 précédente. Le message MRCA contient en particulier la requête de certification complétée de la clé publique Kp dont la certification est demandée ainsi que de ses indicateurs d'usage U, cette clé publique Kp et ces indicateurs d'usage étant ainsi l'objet de la certification demandée précitée.

Le procédé, objet de la présente invention, consiste ensuite, lors de la réception d'un message de requête de certification MRCA précité, pour l'autorité de certification, à effectuer les opérations consistant à l'étape 1009 à retrouver l'identité de l'opérateur habilité $OP_j$ ainsi que l'identifiant $SN_i$ du système embarqué à partir de l'identifiant $IDd_i$ du système embarqué, puis, à l'étape 1010, à retrouver, la plage d'identifiants Lk à laquelle appartient l'identifiant $SN_i$ à partir des données publiées par l'opérateur Opj, puis, à l'étape 1011 à retrouver à partir des données de l'ensemble Lk, l'identifiant du processus supporté par l'algorithme à mettre en oeuvre CAIM, la valeur de la clé publique mère KpM associée à l'ensemble Lk.

On comprend en particulier qu'aux étapes 1009, 1010 et 1011, la publication à l'étape 1002 des variables liées $OP_j$ identifiant de l'opérateur habilité, Lk identifiant de l'ensemble considéré, CAIM identifiant l'algorithme à mettre en oeuvre, et KpM valeur de la clé publique mère associée à cet ensemble de systèmes embarqués, permette de retrouver successivement l'identifiant de cet opérateur habilité puis la valeur de la clé publique KpM ainsi que l'identifiant de l'algorithme à mettre en oeuvre CAIM par exemple à partir des quatre variables liées publiées.

Suite à l'obtention par l'autorité de certification de la valeur de la clé publique mère KpM précitée, une étape 1012 est alors réalisée, laquelle consiste à vérifier, à partir de la valeur de la clé publique mère KpM, du numéro de série $SN_i$ du système embarqué et de la requête de certification complète reçue RCA, la valeur de contrôle cryptographique $Sc_i$. L'opération de vérification de la valeur de contrôle cryptographique $Sc_i$ vérifie la relation :

$$\vartheta_{KPM}(S_{KsMi})$$

On indique que cette opération de vérification consiste en une opération de vérification de signature, opération duale de l'opération de signature réalisée à l'étape 1006 pour obtenir la valeur de contrôle cryptographique $Sc_i$. Ainsi, à l'étape 1012, l'opération de vérification de signature est réalisée à partir de la clé publique mère KpM.

La mise en oeuvre du procédé, objet de la présente invention, tel que décrit en liaison avec la figure 2a permet ainsi d'établir l'authenticité de la valeur de contrôle cryptographique précitée et en conséquence, notamment, l'origine de la requête de certification présentée à l'autorité de certification.

Dans des conditions qui seront explicitées ultérieurement dans la description, la vérification de cette requête, l'origine étant établie, permet , à partir de la valeur d'usage U précitée, de connaître de manière certaine le ou les usages dédiés qui peuvent être effectués avec la clé publique Kp, du fait des usages restrictifs sur les opérations pouvant être réalisés à l'aide de la clé privée Ks contenue dans le système embarqué. On peut alors émettre un certificat à même de garantir l'usage qui peut être fait de cette clé publique du fait des restrictions sur les opérations pouvant être réalisés à l'aide de la clé privée correspondante. Cette garantie d'usage pourra provenir de l'emploi combiné de deux informations qui seront alors présentes dans le certificat généré : d'une part l'indicateur d'usage de la clé publique et d'autre part un identifiant de politique de sécurité. Cette politique de sécurité pourra alors indiquer que la génération de clé a été faite sur un système embarqué réunissant les qualité requises pour limiter l'usage des clés privées générées sur cedit système embarqué. On pourra aussi utiliser toute autre champ d'extension du certificat tel que cela est explicitement prévu par le standard X.509 v3.

Une variante de mise en oeuvre du procédé, objet de la présente invention et permettant la vérification d'un gabarit de requête de certification GRCA, tel que décrit en figure 2a, sera maintenant donnée en relation avec la figure 2b. Dans les figures 2a et 2b, les mêmes étapes portent les mêmes références.

Ainsi qu'on pourra l'observer sur la figure 2b, suite à l'étape 1004 consistant à communiquer au système embarqué Si un gabarit de requête de certification GRCA mais préalablement à l'étape 1005 consistant à faire compléter par le système embarqué Si les champs manquants du gabarit de requête de certification GRCA, le procédé, objet de la présente invention, peut consister en outre à vérifier, en une étape 1004a, au niveau du système embarqué Si considéré, la syntaxe du gabarit de requête de certification précité afin de s'assurer qu'il s'agit bien d'une requête de certification. L'étape 1004a peut alors être suivie d'une étape 1004b consistant par exemple en une étape de test de la valeur vraie de cette vérification de syntaxe. A l'étape 1004a, la vérification de syntaxe est notée V(GRCA) et l'étape de test 1004b est notée V(GRCA)=vraie.

L'étape 1005 consistant à faire compléter par le système embarqué Si les champs manquants du gabarit de requête de certification GRCA peut alors être conditionnée à une vérification positive, c'est-à-dire à une réponse positive à l'étape de test 1004b précédemment mentionnée.

Au contraire, sur réponse négative à l'étape 1004b précitée, un retour 1004c à l'étape de chargement du gabarit de requête de certification GRCA à l'étape 1004 peut alors être prévu.

L'étape de vérification de syntaxe peut être conduite par une vérification de la syntaxe du gabarit de requête de certification GRCA, le processus de vérification précité pouvant dépendre de la structure du gabarit de requête de certification utilisée. Un exemple de processus de vérification de syntaxe sera donné ultérieurement dans la description.

Ainsi, le procédé objet de la présente invention permet, selon un premier aspect, de donner l'usage de la clé privée Ks à l'entité et en aucun cas de donner la connaissance de la valeur de cette clé privée à cette entité. Afin d'empêcher la connaissance de la valeur de la clé privée, le couple clé privée/clé publique est engendré par le système embarqué protégé et la clé privée est mise en oeuvre par un algorithme situé directement dans le système embarqué. En aucun cas elle ne peut donc être connue à l'extérieur du système embarqué.

Selon un deuxième aspect remarquable du procédé objet de l'invention, afin de vérifier que la demande de certification d'une clé publique émane bien du système embarqué le procédé met en oeuvre plusieurs techniques. En particulier il met en oeuvre le calcul d'une somme de contrôle cryptographique qui permet de s'assurer que la requête émane bien d'un système embarqué personnalisé par l'opérateur OPj. L'état de l'art met déjà en oeuvre certaines de ces techniques qui s'avèrent être peu souples d'emploi, comme il va être rappelé ci-dessous. Une première technique consiste à mettre dans chaque système embarqué une clé secrète à partir de laquelle sera effectué le calcul de la somme de contrôle cryptographique. L'inconvénient majeur de cette technique connue est de devoir communiquer à l'avance à chaque autorité de certification potentielle, et de manière confidentielle, la valeur secrète de chaque système embarqué. Une première amélioration du dispositif consiste à utiliser un secret mère et à calculer le secret de chaque système embarqué à partir à la fois du numéro de série du système embarqué et du secret mère. L'inconvénient majeur, dans ce dernier cas, est de devoir communiquer à l'avance à chaque autorité de certification potentielle et de manière confidentielle la valeur secrète de chaque secret mère correspondant à un ensemble donné de systèmes embarqués.

Une originalité de l'invention est au contraire de ne communiquer au préalable aucune information confidentielle mais de rendre accessible à chaque autorité de certification potentielle que des informations publiques, à savoir: un identifiant d'opérateur habilité $OP_j$, une référence de l'ensemble Lk et bien entendu une valeur de la clé publique mère KpM associée à un indicateur de l'algorithme à mettre en oeuvre CAIM.

Ces informations permettent alors à n'importe quelle autorité de certification de vérifier l'origine de la requête de n'importe quel système embarqué faisant partie d'un ensemble de systèmes embarqués.

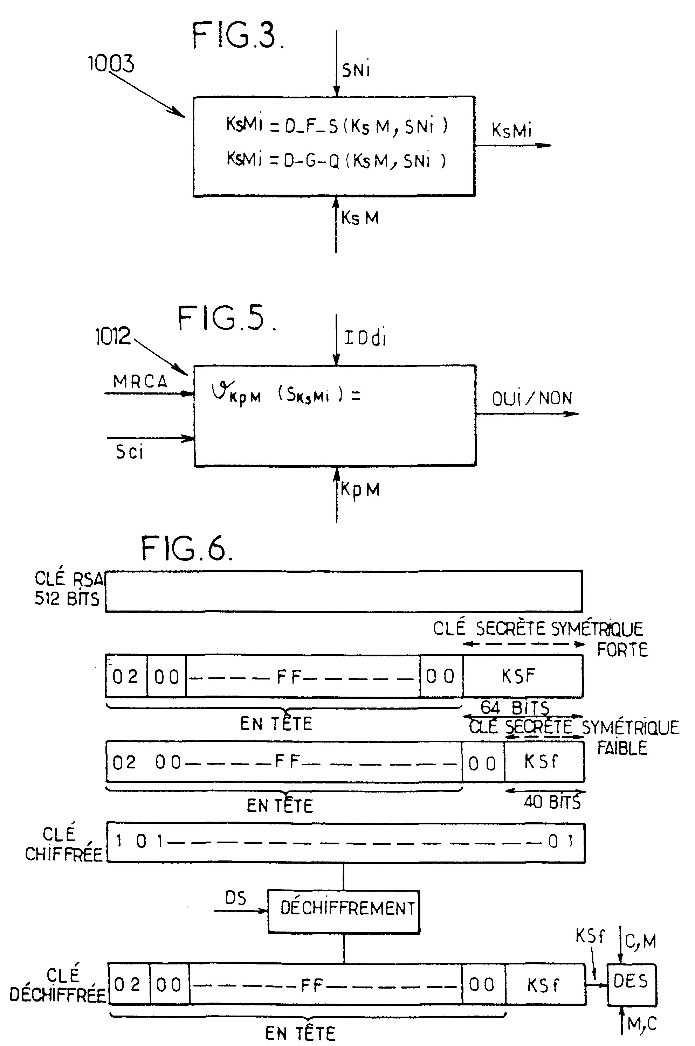

Une description plus détaillée de la mise en oeuvre de l'étape 1003 de calcul de chaque clé privée diversifiée $KsM_i$ sera maintenant donnée en liaison avec la figure 3, le mode opératoire du calcul précité pouvant être mis en oeuvre quel que soit le mode de réalisation du procédé, objet de l'invention, tel que décrit précédemment en liaison avec la figure 2a ou la figure 2b.

Le processus de diversification des clés mis en oeuvre à l'étape 1003 tel que représenté en figure 3 peut ainsi consister en un processus supporté par un algorithme mis en oeuvre sous le nom de Mécanisme de Signature à Apport Nul de Connaissance (*zero knowledge* en anglais) et des algorithmes connus sous le nom de FIAT-SHAMIR ou GUILLOU-QUISQUATER utilisables à cette fin. Pour cette raison, ainsi qu'indiqué en figure 3, chaque clé privée diversifiée $KsM_i$ est réputée obtenue par la mise en oeuvre de processus supportés par les algorithmes de FIAT-SHAMIR F-S ou de GUILLOU-QUISQUATER G-Q et vérifie ainsi la relation :

$$KsM_i = D\text{-}F\text{-}S(KsM, SN_i)$$

$$KsM_i = D\text{-}G\text{-}Q(KsM, SN_i)$$

relation dans laquelle D-F-S et D-G-Q désignent la mise en oeuvre des processus de diversification de clé supportés par les algorithmes de FIAT-SHAMIR et de GUILLOU-QUISQUATER respectivement.

La technique utilisée consiste à mettre dans chaque système embarqué une clé privée diversifiée calculée à partir du numéro de série du système embarqué et d'une clé privée mère, laquelle clé diversifiée servira au calcul de la somme de contrôle cryptographique. L'Autorité de Certification CA sera alors en mesure de vérifier l'exactitude de la somme de contrôle cryptographique ainsi calculée en mettant en oeuvre l'algorithme CAIM correspondant au type d'algorithme utilisé et en utilisant uniquement le numéro de série du système embarqué et la clé publique mère correspondant à l'ensemble Lk dont fait partie le système embarqué.

De ce fait il n'est pas utile de connaître à l'avance quelle Autorité de Certification sera choisie par l'entité car chaque Autorité de Certification sera en mesure, et en particulier postérieurement à la réception de la requête de certificat, d'obtenir la clé publique mère correspondant à l'ensemble dont le système embarqué fait partie. La gestion d'un nombre important de systèmes embarqués, par exemple plusieurs millions, se trouve ainsi grandement simplifiée, permettant ainsi une large diffusion de tels systèmes cryptographiques, en stricte conformité avec les dispositions législatives nationales en autorisant l'utilisation.

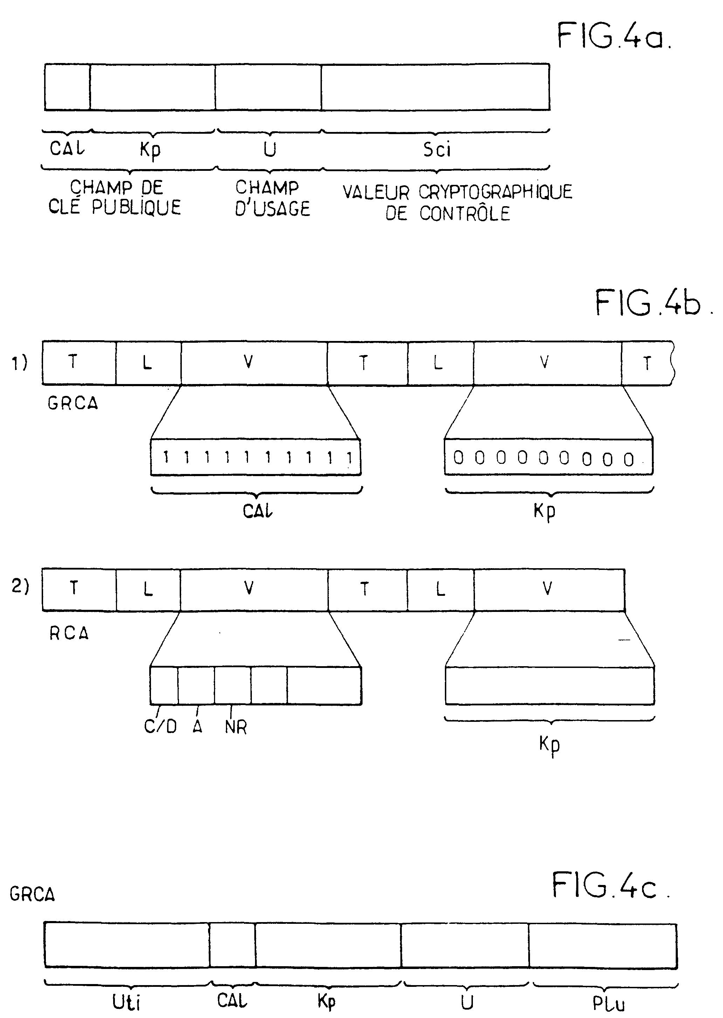

Différents éléments descriptifs de la structure de messages ou de données utilisés pour la mise en oeuvre du procédé, objet de la présente invention, seront maintenant donnés en liaison avec les figures 4a à 4c.

Sur la figure 4a, on a représenté la structure d'un message de requête de certification dans une version simplifiée . Dans ce mode de réalisation simplifié, le système embarqué génère seul l'ensemble des champs de la requête RCA en concaténant les informations suivantes: le champ de clé publique qui comprend l'identifiant de l'algorithme utilisé CAI, la valeur de la clé publique Kp, et un champ d'usage de clé U, objets de la certification demandée. Ces champs peuvent, par exemple, faire l'objet d'un codage conforme au standard ASN1, pour *Abstract Syntax Notation 1* en vocable anglo-saxon, afin de pouvoir délimiter la taille de chaque champ et d'être sûr de la nature de chaque champ. Enfin, la valeur cryptographique de contrôle $Sc_i$, est calculée sur les informations précédentes puis ajoutée aux informations précédentes.

Dans ce mode de réalisation simplifié, l'ensemble des champs précité permet la mise en oeuvre du procédé, objet de la présente invention, tel que représenté en figure 2a par exemple.

La figure 4b représente une structure de messages de requête complétée par exemple, au format conforme au codage ANS1 précité. Dans ce cas, le codage de ces messages est effectué selon le mode dit TLV où T désigne le type du champ, L la longueur de celui-ci et V la valeur du champ.

Sur la figure 4b, au point 1), on a représenté dans un tel cas la structure d'un gabarit de requête de certification GRCA, lequel est réputé formé par une suite de champs TLV séquentiels ou imbriqués conformes au standard ASN1. Ce gabarit de requête est formé à l'extérieur du système embarqué. Il devra comporter, et cela est vérifié par le système embarqué, trois champs et seulement trois champs correspondant à : 1) un type de champ d'identifiant d'algorithme, 2) un type de champ de valeur de clé publique, 3) un type de champ d'un indicateur des usages de clé publique. L'emplacement de chacun de ces champs parmi les autres champs du gabarit de requête doit en outre correspondre à un emplacement bien précis, c'est à dire être précédé et suivi de différents types de champs prédéterminés.

Dans ces conditions, à partir du gabarit de requête de certification GRCA précité, la vérification de syntaxe représentée à l'étape 1004b de la figure 2b peut consister, à vérifier la valeur du type du premier champ, puis en fonction de ce type ou de la longueur de ce champ de passer au type suivant. Au passage il convient de mémoriser l'ensemble des divers types rencontrés puis de vérifier que les trois types de champs attendus sont situés aux endroits où ils doivent être placés. Pour chacun des trois champs, il convient ensuite de vérifier leur longueur et pour le champ CAI sa valeur. En effet, il s'agit de vérifier que le type d'algorithme attendu correspond bien au type de clé généré et correspondant à cet algorithme. Pour les champs formés à l'extérieur du système embarqué qui devront contenir en définitive la valeur de la clé publique Kp et la valeur des indicateur d'usage de la clé U ces derniers peuvent contenir n'importe quelle valeur, les valeurs 0 ou 1 telles que représentées en figure 4b, puisque le système embarqué va leur substituer les valeurs adéquates et générées en interne.

Suite à la reconnaissance à la valeur vraie de la vérification ainsi effectuée, vérification notée V(GRCA) de l'étape 1004a de la figure 2b, les valeurs des deux champs peuvent être substituées par les valeurs générées par le système embarqué. Le champ d'usage U substitué peut consister en une chaîne de bits, le premier bit représentant par exemple un usage de chiffrement/déchiffrement C/D, la valeur 1 indiquant le chiffrement et la valeur 0 l'absence de chiffrement, le deuxième bit correspondant par exemple à un usage de signature numérique ou d'authentification A , le troisième bit correspondant par exemple à une opération de non-répudiation NR mettant en oeuvre une signature numérique par exemple.

En ce qui concerne la valeur de la clé publique Kp, celle-ci peut être substituée à partir des valeurs de bit de cette clé correspondante.

Enfin, en référence à la figure 4c, la structure du gabarit de requête de certification GRCA, chargée à l'initiative de l'utilisateur Uti, peut comporter un champ relatif à un identifiant de cet utilisateur Uti, un champ relatif à la valeur de la clé Kp, clé publique dont la certification est demandée par ce dernier, un champ relatif à l'usage ou aux usages de cette clé U et un champ Plu relatif aux plages de validité ou d'utilisation de la clé Kp précitée.

De manière plus particulière, on indique que le champ relatif à l'identifiant de l'utilisateur Uti est rempli par l'utilisateur lors de sa demande de certification, alors que les champs relatifs à la valeur de la clé Kp et le champ relatif aux usages de cette clé sont remplis par le système embarqué lui-même.

En ce qui concerne le champ relatif à l'identifiant de l'utilisateur Uti, celui-ci peut correspondre au numéro de série $SN_i$ du système embarqué lui-même.

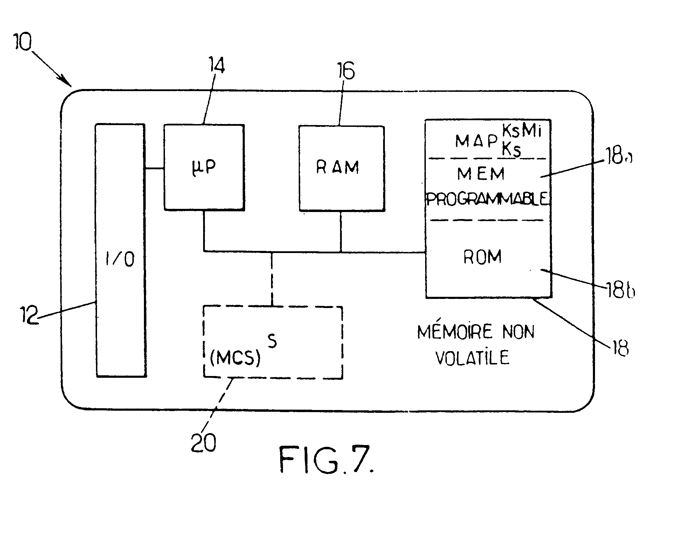

Une description plus détaillée de la mise en oeuvre de l'étape 1012 consistant pour l'autorité de certification à vérifier le message de requête de certification MRCA et en particulier la valeur de contrôle cryptographique $Sc_i$ sera décrite en liaison avec la figure 5.

D'une manière générale, on indique que cette étape de vérification est effectuée grâce à un processus de vérification de signature, en particulier de vérification de la valeur de contrôle cryptographique $Sc_i$, laquelle n'est autre qu'une signature obtenue à partir de la clé privée diversifiée $KsM_i$ à l'étape 1006 précédemment décrite dans la description. Dans ces conditions, l'opération de vérification $\vartheta_{KpM}$ consiste en l'opération duale de celle de celle réalisée à l'étape 1006 précitée.

Ainsi que représenté à la figure 5, les variables d'entrée, outre la clé publique mère KpM qui a été retrouvée suite à l'exécution des étapes 1009, 1010 et 1011 des figures 2a ou 2b, sont la valeur de contrôle cryptographique $Sc_i$ et le message de requête de certification MRCA ainsi que l'identifiant $IDd_i$ du système embarqué, c'est-à-dire l'identifiant de l'opérateur $OP_j$ et le numéro de série $SN_i$ du système embarqué considéré. L'opération de vérification précitée duale de l'opération de signature permet alors, à partir des variables entrées comme paramètres précédemment cités, une réponse par oui ou non, c'est-à-dire l'établissement de la valeur vraie ou de la valeur complémentée de cette valeur vraie, considérée comme valeur fausse, de l'opération de vérification.

Alors que l'origine de la requête de certification a pu ainsi être vérifiée conformément à la mise en oeuvre du procédé, objet de la présente invention, tel que représenté en figure 2a et/ou 2b, le procédé précité permet également de moduler la puissance des traitements cryptographiques, c'est-à-dire de chiffrement/déchiffrement et calcul/vérification de signature, alloués à chaque système embarqué Si considéré.

Ainsi, conformément à un aspect particulièrement remarquable du procédé, objet de la présente invention, celui-ci permet, grâce à la certification demandée d'une clé publique donnée et des usages de cette clé publique, soit d'accréditer le système embarqué Si demandeur de cette certification pour réaliser des opérations de déchiffrement selon un processus supporté par un algorithme faible, ou encore de n'accréditer ce système embarqué ou l'entité titulaire de ce système embarqué que pour des opérations supportées par un algorithme limité à des opérations de calcul de signature seulement.

On comprend en particulier qu'en fonction de la valeur des bits de champ d'usage de la clé considérée, valeur d'usage codée par exemple sur 2 bits, la valeur 1X de ces 2 bits pouvant correspondre à un usage de déchiffrement selon un processus supporté par un algorithme faible, et la valeur X1 pouvant correspondre à une opération selon un processus supporté par un algorithme de génération de signature seulement, le système embarqué accrédité pourra réaliser l'une ou l'autre de ces opérations ou bien les deux opérations, mais pas d'autres opérations telles que le déchiffrement fort. Il est aussi précisé qu'un même système embarqué pourra comporter plusieurs clés, certaines comportant par exemple les bits d'usage avec la valeur 10 restreignant ainsi leur usage à des fins de déchiffrement faible et d'autres avec la valeur 01 restreignant ainsi leur usage à des fins de génération de signature.

Un processus de déchiffrement supporté par un algorithme faible, conformément à l'objet de la présente invention, sera maintenant décrit en liaison avec la figure 6.

De manière générale, on indique qu'une clé de chiffrement ou de déchiffrement utilisée par l'algorithme RSA, clé asymétrique, comprend en général 512 bits ou plus alors qu'une clé symétrique comporte généralement de 40 à 192 bits. Il est donc nécessaire de combler les bits restants, par exemple avec une entête. A titre d'exemple, il est possible, sur la chaîne de 512 bits ainsi créée, de prévoir une en-tête constituée par des valeurs spécifiques arbitraires fictives, les valeurs 02, 00 et en code hexadécimal FFF suivi de deux octets à la valeur 00 sur toute la valeur de l'en-tête auxquelles est concaténée une clé secrète symétrique, cadrée à droite, l'ensemble constituant une chaîne de bits de 512 bits. Dans le cas où la clé secrète symétrique KSF comporte 64 bits ou plus, le processus de déchiffrement à clé secrète symétrique est considéré comme fort et ne correspond pas à l'objet de la présente invention dans ce mode de réalisation.

Au contraire, lorsque le champ de clé secrète symétrique KSf est inférieur ou égal à 40 bits, le champ d'en-tête étant complété par exemple en conséquence par des valeurs hexadécimales FFF suivie d'un nombre prédéterminé de 00, le champ de clé secrète est un champ de clé secrète de déchiffrement symétrique faible et correspond ainsi à une fonction de déchiffrement faible susceptible d'être mise en oeuvre conformément au procédé objet de la présente invention.

Dans un tel cas et conformément à un aspect particulièrement remarquable du procédé, objet de la présente invention, pour un jeu de clés asymétriques, clé publique de chiffrement notée Ep et clé privée de déchiffrement Ds engendrées par le système embarqué Si, la clé de chiffrement Ep correspondant à la clé publique Kp dont la certification est demandée ainsi que mentionné précédemment dans la description et la clé privée de déchiffrement Ds correspondant à la clé privée Ks mentionnée précédemment dans la description, le procédé objet de l'invention consiste alors à associer à la clé de déchiffrement Ds et au processus de déchiffrement asymétrique correspondant, supporté par exemple par l'algorithme RSA, un processus et une clé de déchiffrement faible supporté par exemple par l'algorithme DES et dont la clé symétrique est de longueur inférieure ou égale à 40 bits. Ainsi, en référence à la figure 6, on indique que la clé secrète symétrique faible, notée KSf, complétée de son en-tête de valeur arbitraire telle que mentionnée précédemment dans la description, est soumise à un processus de chiffrement pour obtenir une clé chiffrée à partir de la clé publique Ep de chiffrement asymétrique. La clé chiffrée ainsi obtenue est soumise ensuite à un processus de déchiffrement au moyen de la clé privée de déchiffrement asymétrique Ds alors que, conformément au procédé objet de la présente invention, cette clé privée de déchiffrement Ds est mémorisée dans la zone mémoire à accès externe protégé en écriture/lecture du système embarqué et est donc inconnue de l'utilisateur. Le processus de déchiffrement précité permet alors d'obtenir une clé déchiffrée dont la structure n'est autre que l'en-tête précédemment mentionnée dans la description et la clé symétrique faible KSf dont la longueur est déterminante.

Si la longueur de la clé symétrique faible KSf est inférieure ou égale à 40 bits, l'en-tête étant simplement discriminée par référence aux valeurs d'en-tête correspondantes et la clé symétrique et en particulier la clé symétrique faible KSf étant également discriminées en conséquence, cette clé symétrique faible KSf peut alors être mise à disposition de l'entité possédant le système embarqué pour des opérations de déchiffrement selon un processus supporté par un algorithme faible.

Dans ces conditions, la clé symétrique de déchiffrement faible KSf permet à ce dernier de n'assurer que le déchiffrement de cryptogrammes C en messages M au moyen d'un algorithme de déchiffrement faible ainsi que représenté sur la figure 6.

Si au contraire, la longueur de la chaîne de bits représentative de la clé symétrique autre que l'en-tête précitée est supérieure à 40 bits la clé symétrique, dont la longueur est supérieure à 40 bits, n'est pas mise à disposition de l'entité possédant le système embarqué, laquelle n'est donc pas en mesure d' opérer des opérations de déchiffrement selon un processus supporté par un algorithme fort.

Un système embarqué permettant, notamment, la mise en oeuvre du procédé objet de la présente invention sera maintenant décrit en liaison avec la figure 7. De manière non limitative, ce système embarqué est représenté et décrit sous la forme d'une carte à microprocesseur.

En référence à la figure 7 précitée, le système embarqué comprend, de manière classique, les mêmes éléments que ceux décrits en relation avec la figure 1, à savoir une unité de calcul 14, une mémoire vive 16, une mémoire non volatile 18 comportant une mémoire programmable 18a comprenant une zone mémoire à accès externe protégé MAP, un module de calcul cryptographique 20 et un système d'entrée/sortie 12 reliés par une liaison de type BUS. Afin de permettre la mise en oeuvre du procédé objet de la présente invention, ce système embarqué comporte au moins une clé diversifiée $KsM_i$ mémorisée dans la mémoire MAP à accès externe protégé. Cette clé privée diversifiée est unique et distincte pour ce système embarqué. Elle est calculée à partir d'une clé privée mère KsM et d'un numéro d'identification de ce système embarqué et est associée à une clé publique mère KpM.

Le module cryptographique 20 comporte un module de calcul de signature MCS à partir de la clé privée diversifiée $KsM_i$, permettant de calculer la signature d'une requête de certification d'une clé publique Kp associée à une clé privée Ks de chiffrement, respectivement de signature. La clé privée Ks est engendrée par le module MCS de calcul de signature et mémorisée dans la mémoire à accès protégé MAP. La signature d'une requête de certification est fonction du numéro d'identification de ce système embarqué. Le module de calcul de signature MCS permet de transmettre à une autorité de certification un message de requête de certification comprenant cette requête de certification et la signature précitée. Ceci permet à l'autorité de certification de vérifier l'origine de la requête de certification de ce système embarqué 10 et la protection des clé privée diversifiée $KsM_i$ et clé privée de signature Ks dans la mémoire à accès externe protégé MAP à partir de seuls éléments publics, tels que la clé publique mère KpM. En ce qui concerne le module de calcul de signature MCS, ce dernier peut être implanté dans une partie mémoire morte ROM 18b de la mémoire non volatile 18 et appelé sur requête par le module de calcul cryptographique 20.

## Revendications

1. Procédé de vérification de l'usage de clés publiques issues d'un jeu de clés asymétriques, clé publique ($Kp$) et clé privée ($Ks$) engendrées, pour un usage donné, tel que le chiffrement/déchiffrement ou la vérification/génération de signature numérique, par un système embarqué et mémorisées dans la zone mémoire d'un système embarqué ($S_i$) muni de moyens de calcul cryptographique et de moyens de mémorisation de données numériques à accès externe protégé en écriture/lecture, ces données numériques ($IDd_i$) comportant au moins un numéro de série ($SN_i$) permettant l'identification du système embarqué et un code d'identification ($Op_j$) d'un opérateur habilité à configurer ledit système embarqué et cette requête étant formulée par ledit système embarqué par transmission d'un message de requête (MRCA) contenant ladite clé publique ($Kp$) à une autorité de certification (CA), **caractérisé en ce que** ce procédé consiste :

   • préalablement à toute transmission d'une requête de certification, lors de la configuration de ces systèmes embarqués par cet opérateur habilité pour tous les systèmes embarqués ($S_i$) d'un ensemble ($Lk$) de systèmes embarqués :

      - à faire engendrer par cet opérateur habilité, pour cet ensemble donné de systèmes embarqués, une clé publique mère (KpM) et une clé privée mère (KsM) mis en oeuvre dans le cadre d'un processus supporté par un algorithme (CAIM);
      - à publier ladite clé publique mère (KpM) associée à l'algorithme (CAIM), l'identité de cet opérateur habilité ($OP_j$) et à un ensemble ($Lk$) définissant une plage d'identifiants de systèmes embarqués ;
      - à calculer, pour chaque système embarqué appartenant à cet ensemble ($Lk$) de systèmes embarqués, à partir de ladite clé privée mère (KsM) et du numéro de série ($SN_i$) du système embarqué, une clé privée diversifiée ($KsM_i$) et à mémoriser, dans ladite zone mémoire à accès externe protégé en écriture/lecture, ladite clé privée diversifiée ($KsM_i$), et

   • préalablement à toute transmission d'un message de requête de certification :

      - à faire engendrer par l'intermédiaire du système embarqué une requête de certification (RCA), contenant en particulier un champ de la clé publique ($CAI,Kp$) et les indicateurs d'usage ($U$) de cette clé publique ($Kp$), associée à cette clé privée ($Ks$) de chiffrement respectivement de signature,
      - à calculer, au moyen desdits moyens de calcul et de ladite clé diversifiée ($KsM_i$) associée à ce système embarqué, une valeur de contrôle cryptographique ($Sc_i$) sur l'ensemble de la requête (RCA), ladite valeur de contrôle cryptographique étant une signature numérique calculée au moyen de la clé privée diversifiée ($KsM_i$) ;

   • lors de l'émission, par le système embarqué, d'une requête de certification à l'autorité de certification :

      - à former un message de requête de certification (MRCA) contenant la requête (RCA), l'identifiant ($IDd_i$) du système embarqué, ce dernier étant constitué d'une part de l'identifiant ($OP_j$) de cet opérateur habilité et d'autre part du numéro de série ($SN_i$) du système embarqué, et la valeur de contrôle cryptographique ($Sc_i$),
      - à transmettre à l'autorité de certification (CA) ledit message de requête (MRCA) formé lors de la phase précédente et contenant la clé publique ($Kp$) et les indicateurs d'usage ($U$), objets de ladite certification, et ladite valeur de contrôle cryptographique ($Sc_i$) ;

   • lors de la réception d'un message de requête de certification (MRCA) par l'autorité de certification :

      - à retrouver, l'identité de l'opérateur habilité ($OP_j$) à partir de l'identifiant ($IDd_i$) du système embarqué,
      - à retrouver, à partir dudit identifiant ($OP_J$) de cet opérateur habilité la valeur de la clé publique mère (KpM) ainsi que l'identifiant de l'algorithme (CAIM) associé à l'ensemble auquel appartient le système embarqué,
      - à vérifier à partir de ladite clé publique mère (KpM), dudit numéro de série ($SN_i$) du système embarqué, dudit message de requête de certification reçu (MRCA), ladite valeur de contrôle cryptographique ($Sc_i$), ce qui permet d'établir l'authenticité de cette valeur de contrôle cryptographique et l'origine de cette requête de certification.

2. Procédé selon la revendication 1, **caractérisé en ce que**, lorsque la requête de certification est engendrée par le système embarqué, celui-ci consiste en outre :

- à générer, au niveau du système embarqué, la requête de certification (RCA), laquelle est alors composée de trois champs à savoir: un identifiant d'algorithme à clé publique (CAI), une valeur de clé publique (Kp), et un indicateur des usages de cette clé (U).

3. Procédé selon la revendication 1, **caractérisé en ce que**, lorsque la requête de certification est complétée par le système embarqué lors de l'étape consistant à communiquer audit système embarqué un gabarit de requête de certification (GRCA), celui-ci consiste en outre :

- à vérifier, au niveau du système embarqué, la syntaxe du gabarit de requête de certification (GRCA) afin de s'assurer qu'il s'agit d'une requête de certification bien formée, et
- à conditionner à une vérification positive, l'étape consistant à faire compléter par le système embarqué les champs manquants du gabarit de requête de certification (GRCA).

4. Procédé selon la revendication 1, **caractérisé en ce que**, pour un jeu de clés asymétriques de signature (Kp), (Ks) engendrées par ledit système embarqué, les moyens de calcul cryptographique de ce système embarqué, n'autorisant d'utiliser la clé privée (Ks) qu'à des fins de génération de signature, ladite clé privée (Ks) mémorisée dans ladite zone mémoire à accès externe protégé en écriture/lecture étant inconnue de l'utilisateur et restreinte d'utilisation à des fins exclusives de signature numérique, l'utilisation de ladite clé est restreinte à des fins de signature et l'utilisation du certificat contenant la clé publique correspondante est limitée en pratique à des fins de vérification de signature.

5. Procédé selon la revendication 1, **caractérisé en ce que**, pour un jeu de clés asymétriques clé publique de chiffrement (Ep) et clé privée de déchiffrement (Ds) engendrées par ledit système embarqué, celui-ci consiste à associer auxdites clés (Ep), (Ds) et processus de déchiffrement asymétrique un processus et une clé de déchiffrement symétrique "faible", la clé symétrique de déchiffrement étant chiffrée puis déchiffrée au moyen de la clé privée de déchiffrement asymétrique (Ds), ladite clé privée (Ds) mémorisée dans ladite zone mémoire à accès externe protégé en écriture/lecture étant inconnue de l'utilisateur, ce qui permet de n'autoriser l'utilisation de ladite clé qu'à des fins de déchiffrement faible et l'utilisation du certificat contenant la clé publique correspondante étant limitée en pratique à des fins de chiffrement faible.

6. Système embarqué comprenant une unité de calcul (14), une mémoire vive (16), une mémoire non volatile (18) comportant une mémoire programmable (18a) comprenant une zone mémoire à accès externe protégé (MAP), un module de calcul cryptographique (20) et un système d'entrée/sortie (12) reliés par une liaison de type BUS, **caractérisé en ce que** ledit système embarqué comporte au moins :

- une clé privée diversifiée unique et distincte (KsM$_i$) mémorisée dans ladite mémoire à accès externe protégé (MAP), ladite clé privée diversifiée unique et distincte pour ce système embarqué calculée à partir d'une clé privée mère (KsM) et d'un numéro d'identification de ce système embarqué étant associée à une clé publique mère (KpM) ; ledit module de calcul cryptographique (20) comportant :

- des moyens de calcul de signature (MCS), à partir de ladite clé privée diversifiée (KsM$_i$), permettant de calculer la signature (Sc$_i$) d'une requête de certification (RCA) d'une clé publique (Kp) associée à une clé privée (Ks) de chiffrement, respectivement de signature, ladite clé privée (Ks) engendrée par lesdits moyens de calcul de signature (MCS) étant mémorisée dans ladite mémoire à accès protégé (MAP), cette signature (Sc$_i$) d'une requête de certification étant fonction du numéro d'identification de ce système (Sci=SKsM$_i$(RCA,IDd$_i$))embarqué, lesdits moyens de calcul de signature (MCS) permettant de transmettre à une autorité de certification un message de requête de certification contenant ladite requête de certification (RCA) et ladite signature (Sc$_i$) ce qui permet à ladite autorité de certification de vérifier l'origine de la requête de certification de ce système embarqué et la protection desdites clé privée diversifiée unique et distincte (KsM$_i$) et clé privée (Ks) de chiffrement respectivement de signature dans ladite mémoire à accès externe protégé (MAP) à partir de seuls éléments publics, tels que ladite clé publique mère (KpM).

**Patentansprüche**

1. Verfahren zum Überprüfen des Gebrauchs von öffentlichen Schlüsseln, die aus einem Satz von asymmetrischen Schlüsseln, nämlich einem öffentlichen Schlüssel (Kp) und einem privaten Schlüssel (Ks), hervorgegangen sind, die für einen gegebenen Gebrauch, zum Beispiel eine Verschlüsselung/ Entschlüsselung oder die Überprüfung/Erzeugung einer digitalen Unterschrift, von einem eingebetteten System erzeugt und im Speicherbereich eines

eingebetteten Systems ($S_i$) gespeichert werden, das mit einer Einrichtung für kryptographische Berechnungen und mit einer einen geschützten äußeren Schreib-/Lesezugang aufweisenden Einrichtung zum Speichern digitaler Daten versehen ist, wobei diese digitalen Daten ($IDd_i$) wenigstens eine die Identifizierung des eingebetteten Systems ermöglichende Seriennummer ($SN_i$) und einen Code ($Op_j$) zur Identifizierung eines Bedieners umfassen, der befugt ist, das eingebettete System zu konfigurieren, und wobei diese Anfrage durch das eingebettete System formuliert wird, indem eine den öffentlichen Schlüssel (Kp) enthaltende Anfragenachricht (MRCA) an eine Zertifizierungsstelle (CA) übertragen wird, **dadurch gekennzeichnet, dass** das Verfahren folgende Schritte umfasst:

- vor jeder Übertragung einer Zertifizierungsanfrage, anlässlich der Konfigurierung der eingebetteten Systeme durch den Bediener, der für alle eingebetteten Systeme ($S_i$) einer Gruppe (Lk) von eingebetteten Systemen befugt ist:

    - durch den befugten Bediener lässt man für die gegebene Gruppe von eingebetteten Systemen einen öffentlichen Mutterschlüssel (KpM) und einen privaten Mutterschlüssel (KsM) erzeugen, die im Rahmen eines auf einen Algorithmus (CAIM) gestützten Verfahrens verwirklicht werden;
    - der öffentliche Mutterschlüssel (KpM), welcher dem Algorithmus (CAIM), der Identität des befugten Bedieners ($OP_j$) und einer einen Bereich von Identifikatoren eingebetteter Systeme definierenden Gruppe (Lk) zugeordnet ist, wird veröffentlicht;
    - für jedes eingebettete System, das zu der Gruppe (Lk) von eingebetteten Systemen gehört, wird anhand des privaten Mutterschlüssels (KsM) und der Seriennnummer ($SN_i$) des eingebetteten Systems ein abgewandelter privater Schlüssel ($KsM_i$) berechnet, und der abgewandelte private Schlüssel ($KsM_i$) wird in dem den geschützten äußeren Schreib-/Lesezugang aufweisenden Speicherbereich abgelegt, und

- vor jeder Übertragung einer Nachricht zur Anfrage nach einer Zertifizierung:

    - man lässt mittels des eingebetteten Systems eine Zertifizierungsanfrage (RCA) erzeugen, die insbesondere ein Feld des öffentlichen Schlüssels (CAI, Kp) und die Indikatoren der Verwendung (U) des öffentlichen Schlüssels (Kp) enthält, wobei die Zertifizierungsanfrage dem privaten Verschlüsselungs- bzw Unterschriftsschlüssel (Ks) zugeordnet ist,
    - mittels der Recheneinrichtung und des dem eingebetteten System zugeordneten abgewandelten Schlüssels ($KsM_i$) wird über die Gesamtheit der Anfrage (RCA) ein kryptographischer Kontrollwert ($Sc_i$) berechnet, wobei der kryptographische Kontrollwert eine digitale Unterschrift ist, die mittels des abgewandelten privaten Schlüssels ($KsM_i$) berechnet wird;

- bei der Ausgabe einer Zertifizierungsanfrage durch das eingebettete System an die Zertifizierungsstelle:

    - eine Nachricht (MRCA) zur Anfrage nach einer Zertifizierung wird gebildet, wobei die Nachricht die Anfrage (RCA), den Identifikator ($IDd_i$) des eingebetteten Systems und den kryptographischen Kontrollwert ($Sc_i$) enthält, wobei der Identifikator des eingebetteten Systems zum einen aus dem Identifikator ($OP_j$) des befugten Bedieners und zum anderen aus der Seriennummer ($SN_i$) des eingebetteten Systems besteht,
    - an die Zertifizierungsstelle (CA) wird die im vorhergehenden Schritt gebildete Anfragenachricht (MRCA) übertragen, die den öffentlichen Schlüssel (Kp) und die die Gegenstände der Zertifizierung darstellenden Gebrauchsindikatoren (U) und den kryptographischen Kontrollwert ($Sc_i$) enthält;

- beim Empfang einer Nachricht (MRCA) zur Anfrage nach einer Zertifizierung durch die Zertifizierungsstelle:

    - anhand des Identifikators ($IDd_i$) des eingebetteten Systems wird die Identität des befugten Bedieners ($OP_j$) wiedergefunden,
    - anhand des Identifikators ($OP_j$) des befugten Bedieners werden der Wert des öffentlichen Mutterschlüssels (KpM) sowie der Identifikator des Algorithmus (CAIM) wiedergefunden, der der Gruppe zugeordnet ist, dem das eingebettete System angehört,
    - anhand des öffentlichen Mutterschlüssels (KpM), der Seriennummer ($SN_i$) des eingebetteten Systems und der empfangenen Nachricht (MRCA) zur Anfrage nach einer Zertifizierung wird der kryptographische Kontrollwert ($Sc_i$) überprüft, wodurch die Authentizität des kryptographischen Kontrollwerts ($Sc_i$) und der Ursprung der Zertifizierungsanfrage festgestellt werden können.

2. Verfahren nach Anspruch 1, **dadurch gekennzeichnet, dass** es bei der Erzeugung der Zertifizierungsanfrage durch das eingebettete System folgende weitere Schritte umfasst:

- im eingebetteten System wird die Zertifizierungsanfrage (RCA) erzeugt, die dann aus drei Feldern zusammengesetzt ist, nämlich: einem Identifikator eines Algorithmus mit öffentlichem Schlüssel (CAI), einem Wert eines öffentlichen Schlüssels (Kp), und einem Indikator (U) der Verwendungen dieses Schlüssels.

3. Verfahren nach Anspruch 1, **dadurch gekennzeichnet, dass** es folgende weitere Schritte umfasst, wenn in dem Schritt, in dem dem eingebetteten System ein Muster (GRCA) einer Zertifizierungsanfrage mitgeteilt wird, das eingebettete System die Zertifizierungsanfrage vervollständigt:

- im eingebetteten System wird die Syntax des Zertifizierungsanfragemusters (GRCA) überprüft, um sich zu vergewissern, dass es sich um eine ordnungsgemäß gebildete Zertifizierungsanfrage handelt, und
- von einer positiven Überprüfung wird der Schritt abhängig gemacht, in welchem man das eingebettete System die fehlenden Felder des Zertifizierungsanfragemusters (GRCA) vervollständigen lässt.

4. Verfahren nach Anspruch 1, **dadurch gekennzeichnet, dass** für einen Satz von asymmetrischen Schlüsseln (Kp, Ks), die durch das eingebettete System erzeugt werden, wobei die für kryptographische Berechnungen dienende Einrichtung des eingebetteten Systems den privaten Schlüssel (Ks) nur zum Zweck der Erzeugung einer Unterschrift zu gebrauchen gestattet und der private Schlüssel (Ks), der in dem den geschützten äußeren Schreib-/Lesezugang aufweisenden Speicherbereich abgelegt ist, dem Benutzer unbekannt ist und hinsichtlich seines Gebrauchs ausschließlich auf Zwecke einer digitalen Unterschrift beschränkt ist, der Gebrauch des Schlüssels auf Unterschriftszwecke beschränkt ist und der Gebrauch des den zugehörigen öffentlichen Schlüssel enthaltenden Zertifikats in der Praxis auf Zwecke der Überprüfung einer Unterschrift beschränkt ist.

5. Verfahren nach Anspruch 1, **dadurch gekennzeichnet, dass** es für einen Satz von durch das eingebettete System erzeugten asymmetrischen Schlüsseln, nämlich einem öffentlichen Verschlüsselungsschlüssel (Ep) und einem privaten Entschlüsselungsschlüssel (Ds), die Schritte umfasst, dass den Schlüsseln (Ep, Ds) und dem asymmetrischen Entschlüsselungsverfahren ein Entschlüsselungsverfahren mit "schwachem" symmetrischen Entschlüsselungsschlüssel zugeordnet wird, wobei der symmetrische Entschlüsselungsschlüssel mit Hilfe des asymmetrischen privaten Entschlüsselungsschlüssels (Ds) verschlüsselt und dann entschlüsselt wird, wobei der private Schlüssel (Ds), der in dem den geschützten äußeren Schreib-/Lesezugang aufweisenden Speicherbereich abgelegt ist, dem Benutzer unbekannt ist, wodurch es möglich ist, den Gebrauch des Schlüssels nur zu Zwecken einer schwachen Entschlüsselung zu erlauben, und wobei der Gebrauch des den zugehörigen öffentlichen Schlüssel enthaltenden Zertifikats in der Praxis auf Zwecke einer schwachen Verschlüsselung beschränkt ist.

6. Eingebettetes System mit einer Recheneinheit (14), einem Schreib-/Lesespeicher (16), einem nicht-flüchtigen Speicher (18), der einen programmierbaren Speicher (18a) umfasst, welcher einen Speicherbereich (MAP) mit geschütztem äußeren Zugang aufweist, einem Modul (20) für kryptographische Berechnungen und einem Ein-/Ausgangssystem (12), die durch eine BUS-artige Verbindung miteinander verbunden sind, **dadurch gekennzeichnet, dass** das eingebettete System wenigstens folgende Merkmale aufweist:

- einen einmaligen und unterscheidbaren abgewandelten privaten Schlüssel ($KsM_i$), der in dem den geschützten äußeren Zugang aufweisenden Speicher (MAP) abgelegt ist, wobei der für das eingebettete System einmalige und unterscheidbare abgewandelte private Schlüssel, der anhand eines privaten Mutterschlüssels (KsM) und einer das eingebettete System identifizierenden Zahl berechnet wird, einem öffentlichen Mutterschlüssel (KpM) zugeordnet ist; wobei das Modul (20) für kryptographische Berechnungen folgende Merkmale aufweist:

- eine Einrichtung (MCS) zum Berechnen einer Unterschrift anhand des abgewandelten privaten Schlüssels ($KsM_i$), die es ermöglicht, die Unterschrift ($Sc_i$) zu einer Anfrage (RCA) nach Zertifizierung eines öffentlichen Schlüssels (Kp) zu berechnen, der einem privaten Verschlüsselungs- bzw Unterschriftsschlüssel (Ks) zugeordnet ist, wobei der private Schlüssel (Ks), der von der zum Berechnen einer Unterschrift dienenden Einrichtung (MCS) erzeugt wird, in dem den geschützten äußeren Zugang aufweisenden Speicher (MAP) abgelegt ist, wobei die Unterschrift ($Sc_i$) zu einer Zertifizierungsanfrage eine Funktion der das eingebettete System identifizierenden Zahl ist

(Sc$_i$=SKsM$_i$(RCA,IDd$_i$)), wobei die zum Berechnen einer Unterschrift dienende Einrichtung (MCS) es ermöglicht, an eine Zertifizierungsstelle eine Zertifizierungsanfragenachricht zu übertragen, die die Zertifizierungsanfrage (RCA) und die Unterschrift (Sc$_i$) enthält, wodurch die Zertifizierungsstelle den Ursprung der Zertifizierungsanfrage des eingebetteten Systems überprüfen kann und der einmalige und unterscheidbare abgewandelte private Schlüssel (KsM$_i$) und der private Verschlüsselungs- bzw Unterschriftsschlüssel (Ks) in dem den geschützten äußeren Zugang aufweisenden Speicher (MAP) ausschließlich anhand öffentlicher Elemente, wie zum Beispiel des öffentlichen Mutterschlüssels (KpM), geschützt werden können.

## Claims

1. A method for verifying the use of public keys from a set of asymmetric keys, a public key (Kp) and a private key (Ks) which are generated, for a given use, such as the encrypting/decrypting or the verification/generation of a digital signature, by an on-board system and are stored in the storage area of an on-board system (S$_i$) equipped with cryptographic computing means and with digital data storage means with protected external read/write access, the digital data (IDd$_i$) including at least one serial number (SN$_i$) permitting the identification of the on-board system and an identification code (Op$_j$) of an operator authorised to configure said on-board system and the request being formulated by said on-board system by transmission of a request message (MRCA) containing said public key (Kp) to a certification authority (CA), **characterised in that** the method consists in:

   • prior to any transmission of a certification request, during the configuration of the on-board systems by the authorised operator for all the on-board systems (S$_1$) of an assembly (Lk) of on-board systems:

      - generating, by the authorised operator, for the given assembly of on-board systems, a parent public key (KpM) and a parent private key (KsM) employed within the framework of a process supported by an algorithm (CAIM);
      - publishing said parent public key (KpM) associated with the algorithm (CAIM), the identity of the authorised operator (OP$_j$) and with an assembly (Lk) defining a range of identifiers of on-board systems;
      - computing, for each on-board system belonging to the assembly (Lk) of on-board systems, from said parent private key (KsM) and from the serial number (SN$_i$) of the on-board system, a diversified private key (KsM$_i$) and storing, in said storage area with protected external read/write access, said diversified private key (KsM$_i$), and

   • prior to any transmission of a certification request message:

      - generating by means of the on-board system a certification request (RCA), containing in particular a field of the public key (CAI, Kp) and the utilisation indicators (U) of the public key (Kp), associated with the private encrypting, respectively signature, key (Ks),
      - computing, by means of said computing means and said diversified key (KsM$_i$) associated with the on-board system, a cryptographic control value (Sc$_i$) on the whole of the request (RCA), said cryptographic control value being a digital signature computed by means of the diversified private key (KsM$_i$);

   • during the transmission, by the on-board system, of a certification request to the certification authority:

      - forming a certification request message (MRCA) containing the request (RCA), the identifier (IDd$_i$) of the on-board system, the latter consisting on the one hand of the identifier (OP$_j$) of the authorised operator and on the other hand of the serial number (SN$_i$) of the on-board system, and the cryptographic control value (Sc$_i$),
      - transmitting to the certification authority (CA) said request message (MRCA) formed during the preceding phase and containing the public key (Kp) and the utilisation indicators (U), subjects of said certification, and said cryptographic control value (Sc$_i$);

   • during reception of a certification request message (MRCA) by the certification authority:

      - retrieving the identity of the authorised operator (OP$_j$) from the identifier (IDd$_i$) of the on-board system,
      - retrieving, from said identifier (OP$_j$) of the authorised operator the value of the parent public key (KpM) and also the identifier of the algorithm (CAIM) associated with the assembly to which the on-board system belongs,

- verifying from said parent public key (KpM), from said serial number ($SN_i$) of the on-board system, from said certification request message (MRCA) received, said cryptographic control value ($Sc_i$), thereby making it possible to establish the authenticity of the cryptographic control value and the origin of the certification request.

2. A method according to claim 1, **characterised in that**, when the certification request is generated by the on-board system, the method further consists in:

    - generating, at the on-board system, the certification request (RCA), which is then composed of three fields, i.e: a public key algorithm identifier (CAI), a public key value (Kp), and a utilisation indicator (U) for the key.

3. A method according to claim 1, **characterised in that**, when the certification request is completed by the on-board system during the step consisting of communicating to said on-board system a certification request template (GRCA), the method further consists in:

    - verifying, at the on-board system, the syntax of the certification request template (GRCA) in order to ensure that it is a correctly formed certification request, and
    - formulating to a positive verification, the step consisting in causing the on-board system to complete the missing fields of the certification request template (GRCA).

4. A method according to claim 1, **characterised in that**, for a set of asymmetric signature keys (Kp), (Ks) generated by said on-board system, the cryptographic computing means of the on-board system, authorising the use of the private key (Ks) only for the purpose of signature generation, said private key (Ks) stored in said storage area with protected external reading/writing access being unknown to the user and restricted to use for the exclusive purpose of digital signature, the use of said key is restricted to the purpose of signature and the use of the certificate containing the corresponding public key is limited in practice to the purpose of signature verification.

5. A method according to claim 1, **characterised in that**, for a set of asymmetric keys, public encrypting key (Ep) and private decrypting key (Ds) generated by said on-board system, the method consists in associating with said keys (Ep), (Ds) and asymmetric decrypting process a "weak" process and symmetric decrypting key, the symmetric decrypting key being encrypted then decrypted by means of the asymmetric private decrypting key (Ds), said private key (Ds) stored in said storage area with protected external reading/writing access being unknown to the user, thereby making it possible to authorise the use of said key only for the purpose of weak decrypting and the use of the certificate containing the corresponding.public key being limited in practice to the purpose of weak encrypting.

6. An on-board system comprising a computing unit (14), a read-write memory (16), a non-volatile memory (18) including a programmable memory (18a) comprising a storage area with protected external access (PAM), a cryptographic computing module (20) and an input/output system (12) which are connected by a BUS type linkage, **characterised in that** said on-board system includes at least:

    - a single, separate diversified private key ($KsM_i$) stored in said memory with protected external access (PAM), said single, separate diversified private key for the on-board system computed from a parent private key (KsM) and from an identification number of the on-board system being associated with a parent public key (KpM); said cryptographic computing module (20) including:

    - means for computing a signature (SCM), from said diversified private key ($KsM_i$), making it possible to compute the signature ($Sc_i$) of a certification request (RCA) from a public key (Kp) associated with a private encrypting, respectively signature, key (Ks), said private key (Ks) generated by said signature computing means (SCM) being stored in said protected access memory (PAM), the signature ($Sc_i$) of a certification request depending on the identification number of the on-board system ($Sci=SKsM_i$ ($RCA,IDd_i$), said signature computing means (SCM) making it possible to transmit to a certification authority a certification request message containing said certification request (RCA) and said signature ($Sc_i$), thereby permitting said certification authority to verify the origin of the certification request of the on-board system and the protection of said single, separate diversified private key ($KsM_i$) and private encrypting, respectively signature, key (Ks) in said protected external access memory (PAM) from only public elements, such as said parent public key (KpM).

FIG.1.
(ART ANTÉRIEUR)

FIG.2a.

FIG.2b.

1000 — ( $ID_{di} = (OP_j, SN_i)$ $L_k$ )

1001 — CRÉATION $K_pM$ , $K_SM$

1002 — PUBLICATION ( $OP_j$ , $L_k$ , $K_pM$ , $CALM$ )

} CONFIGURATION PAR $OP_j$ DE $L_k$

1003 — CALCUL ET MÉMORISATION $K_SM_i$

} POUR CHAQUE $SN_i$

1004 — CHARGEMENT GRCA

V(GRCA):VÉRIFICATION SYNTAXE

1004a

1004b

1004c

◇ $V(GRCA) \stackrel{=}{=} VRAIE$ ◇

1005 — $RCA = GRCA + (CAL, K_p, U)$

1006 — $Sc_i = S_{KSMi}(RCA\ ID_{di})$

POUR TOUTE CLÉ PUBLIQUE $K_p$ À CERTIFIER DE CHAQUE $SN_i$

PRÉ REQUÊTE PAR $Ut_i$

$Ut_i$ = UTILISATEUR

1007 — $MRCA = (RCA, Sc_i)$

1008 — TRANSMISSION ( MRCA )

} REQUÊTE PAR $Ut_i$

1009 — RETROUVE $OP_j$ , $SN_i$ PAR $ID_{di}$

1010 — RETROUVE $L_k$ PAR $SN_i$

1011 — RETROUVE $CALM$ , $K_pM$ PAR $L_k$

1012 — $V_{KPM} (S_{KSMi})$

} AUTORITÉ DE CERTIFICATION

EP 1 072 124 B1

## FIG.3.

1003 →

$$Ks_Mi = D\_F\_S(K_S M, SN_i)$$
$$Ks_Mi = D-G-Q(K_S M, SN_i)$$

SN_i ↓

→ Ks_Mi

↑ K_S M

## FIG.5.

1012 →

MRCA →

$$\mathcal{V}_{KpM}(S_{Ks_Mi}) =$$

Sci →

IOdi ↓

→ OUi / NON

↑ KpM

## FIG.6.

| CLÉ RSA 512 BITS | |

CLÉ SECRÈTE SYMÉTRIQUE FORTE

| 02 | 00 | — — — — FF — — — — — | 00 | KSF |

64 BITS

EN TÊTE

CLÉ SECRÈTE SYMÉTRIQUE FAIBLE

| 02 | 00 — — — — FF — — — — — | 00 | KSf |

40 BITS

EN TÊTE

CLÉ CHIFFRÉE | 1 0 1 — — — — — — — — — 0 1 |

DS → DÉCHIFFREMENT

KSf | C,M ↓

CLÉ DÉCHIFFRÉE | 02 | 00 | — — — — — FF — — — — | 00 | KSf | → DES

EN TÊTE

↑ M,C

20

# FIG.4a.

| CAL | Kp | U | Sci |
|---|---|---|---|

CAL  Kp    U         Sci

CHAMP DE         CHAMP        VALEUR CRYPTOGRAPHIQUE
CLÉ PUBLIQUE     D'USAGE           DE CONTRÔLE

# FIG.4b.

1)

| T | L | V | T | L | V | T |
|---|---|---|---|---|---|---|

GRCA

| 1 | 1 | 1 | 1 | 1 | 1 | 1 | 1 | 1 | 1 |
|---|---|---|---|---|---|---|---|---|---|

CAL

| 0 | 0 | 0 | 0 | 0 | 0 | 0 | 0 |
|---|---|---|---|---|---|---|---|

Kp

2)

| T | L | V | T | L | V |
|---|---|---|---|---|---|

RCA

C/D  A  NR

Kp

# FIG.4c.

GRCA

| Uti | CAL | Kp | U | Plu |
|---|---|---|---|---|

FIG.7.